(19)

Europäisches
Patentamt

European
Patent Office

Office européen
des brevets

(11) **EP 4 685 890 A1**

(12) **EUROPEAN PATENT APPLICATION**

(43) Date of publication:
**28.01.2026 Bulletin 2026/05**

(21) Application number: **24190042.2**

(22) Date of filing: **22.07.2024**

(51) International Patent Classification (IPC):
**H01M 8/0656** (2016.01)    **B01D 53/22** (2006.01)
**B01J 19/12** (2006.01)    **C01B 3/04** (2026.01)
**C25B 1/04** (2021.01)    **C25B 9/17** (2021.01)
**C25B 9/50** (2021.01)

(52) Cooperative Patent Classification (CPC):
**H01M 8/0656; B01D 53/22; B01J 19/127;
C01B 3/042; C25B 1/04; C25B 1/55; C25B 9/17;
C25B 9/50; C25B 9/73**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Epinovatech AB
223 63 Lund (SE)**

(72) Inventor: **OLSSON, Martin Andreas
223 63 Lund (SE)**

(74) Representative: **Zacco Sweden AB
P.O. Box 5581
Löjtnantsgatan 21
114 85 Stockholm (SE)**

(54) **WATER ELECTROLYSIS DEVICE AND A SYSTEM COMPRISING SUCH A WATER ELECTROLYSIS DEVICE**

(57)    The present invention relates to a water electrolysis device comprising a plurality of nanopillars. Each nanopillar has a vertical extension in relation to a plane of extension of a substrate supporting the nanopillars. Further, each nanopillar comprises a plurality of quantum dot segments of $In_xGa_{1-x}N$ alloy, wherein each quantum dot segment is interposed along the vertical extension between barrier segments of GaN, wherein each quantum dot segment has a thickness of less than or equal to 20 nm along the vertical extension. Moreover, each nanopillar comprises a p-side portion constituting a photoanode and an n-side portion constituting a photocathode, wherein the photoanode comprises at least one quantum dot segment and the photocathode comprises at least one quantum dot segment, wherein the photoanode and the photocathode are separated by a depletion portion comprising GaN. A system for water electrolysis comprising such a water electrolysis device is also presented.

Fig. 1

**EP 4 685 890 A1**

## Description

Technical field

The present inventive concept relates, in general, to a water electrolysis device for performing electrolysis of water and a system comprising such a water electrolysis device. The water electrolysis device may be made to be self-propelled by subjecting it for light, e.g. sunlight, while it being submerged in water, preferably sea water.

Background

Hydrogen gas can be used as a clean fuel. It may e.g. be used in fuel cells to produce electrical current wherein the waste products may mainly comprise water. Hydrogen gas may be produced by performing electrolysis of water e.g. by photo-electrolytic cells. However, current devices for performing electrolysis of water leave room for improvements.

Summary of the invention

It is an objective of the inventive concept to enable electrolysis of water. It is a further objective of the inventive concept to enable energy-efficient and/or cost-efficient electrolysis of water. It is a further objective of the inventive concept to enable environmentally friendly electrolysis of water. It is a further objective of the inventive concept to enable generation of current from hydrogen produced by electrolysis of water. These and other objectives of the inventive concept are at least partly met by the invention as defined in the independent claims. Preferred embodiments are set out in the dependent claims.

According to a first aspect a water electrolysis device is provided. The water electrolysis device comprising a plurality of nanopillars. Each nanopillar has a vertical extension in relation to a plane of extension of a substrate supporting the nanopillars. Each nanopillar comprises a plurality of quantum dot segments of $In_xGa_{1-x}N$ alloy. Each quantum dot segment is interposed along the vertical extension between barrier segments of GaN. Each quantum dot segment has a thickness of less than or equal to 20 nm along the vertical extension. Each nanopillar comprises a p-side portion constituting a photoanode and an n-side portion constituting a photocathode. The photoanode comprises at least one quantum dot segment. The photocathode comprises at least one quantum dot segment. The photoanode and the photocathode are separated by a depletion portion comprising GaN.

It is a realization of the inventor that transfer of ions in the water may be rate limiting for the electrolysis of water. Thus, in a water electrolysis device with a photocathode and a photoanode being arranged in the same nanopillar, the distance for the ions to travel may be small.

This may result in efficient ion transport and thereby efficient production of hydrogen gas. Further, having the photoanode and the photocathode arranged in the same nanopillar facilitate a compact device. Moreover, having the photoanode and the photocathode arranged in the same nanopillar facilitate a low production cost as fewer parts may be needed for the water electrolysis device. Furthermore, the quantum dot segments in the respective photoanode and the photocathode allow for multiple excitons to be generated at energies twice the bandgap energy $E_g$. This due to that electrons can tunnel between the quantum dots. The use of $In_xGa_{1-x}N$ alloys for the quantum dot segments allow for having bandgap close to the oxidation potential of water. Since the nanopillars comprises both a photoanode and a photocathode the water electrolysis device may be unbiased and self-driven by light illumination, typically solar light illumination. Another advantage of the presented water electrolysis device is that no platinum electrode and/or iridium (oxide) electrode rare earth metal catalyst is needed.

Each nanopillar may have a largest cross section, in a plane parallel to the plane of extension of the substrate, of less than or equal to 20 nm. Such cross section will define the quantum dot segments as confined in all three dimensions. Quantum dots are semiconductor structures small enough to exhibit quantum mechanical energy quantization. The quantum dots may have sizes smaller than $20 \times 20 \times 20$ nm, such as $3 \times 10 \times 10$ nm, preferably with the smallest dimension e.g. 3 nm being in the growth direction of GaN, such as C-direction of wurtzite. The quantum dots may exhibit full energy quantization, i.e. charge carriers within the quantum dots may be confined in all three dimensions. Quantum dots may thus be seen as zero-dimensional structures which may have a higher density of states than e.g. one-dimensional structures (e.g. quantum wires), or two-dimensional structures (e.g. quantum wells), or three-dimensional structures (e.g. bulk structures). A high density of states may provide efficient absorption of light, e.g. sunlight. A high density of states may additionally or alternatively enhance the generation of electron-hole pairs for the water splitting.

For each quantum dot of the nanopillars, a distance to each neighboring quantum dot in the plane of extension of the substrate may be less than 100 nm, preferably less than 10 nm. By such an arrangement the nanopillars may be closely packed to provide electron correlation between quantum dots, more specifically between $In_xGa_{1-x}N$ quantum dot segments arranged in the respective nanopillars. This may improve multiple excitation generation of electron-hole pairs. By doing so, a single photon may generate more than 2 electron-hole pairs. A further advantage of such closely packed nanopillar structure is that a surface to volume ratio may be enhanced. The surface to volume ratio may be above 3 $m^2/g$ to facilitate a high active area for water electrolysis.

The plurality of nanopillars may be arranged in a hexagonal cell pattern with an additional nanopillar in a center of each hexagonal cell.

An Indium content, x, of the one or more quantum dot segments may be $0.40 \leq x \leq 0.60$.

One or more of the barrier segments may comprise a dopant selected from a group of rare earth dopants comprising Erbium, Praseodymium, Thulium and Terbium. One or more of the quantum dot segments may comprise a dopant selected from a group of rare earth dopants comprising Erbium, Praseodymium, Thulium and Terbium. Doping the barrier segments and/or the quantum dot segments in this manner provide for tailoring the photoanode and/or the photocathode for energy transitions within the band gap for harvesting of the full spectrum of sunlight. This without configuring additional absorbers of different $In_xGa_{1-x}N$ alloys for the quantum dot segments.

The plurality of nanopillars may further comprise a top portion comprising a superlattice structure of AlN and AlGaN segments. The superlattice structure may form a Bragg reflector. Arranging such a Bragg reflector may enhance the capturing of incoming light in the water electrolysis device.

A superlattice structure of AlN and AlGaN layers may be arranged in-between the substrate and the plurality of nanopillars. The superlattice structure may form a Bragg reflector. Arranging such a Bragg reflector may enhance the capturing of incoming light in the water electrolysis device.

According to a second aspect system for water electrolysis is provided. The system comprises: a water electrolysis device according to the first aspect and a container configured to hold water, the container comprising a gas outlet. The water electrolysis device and the container are arranged such that when the container holds water, the plurality of nanopillars of the water electrolysis device are immersed in the water. The system is configured such that when the water electrolysis device is in operation, and the plurality of nanopillars of the water electrolysis device are immersed in the water and illuminated by light, a gas mixture flow is presented at the gas outlet of the container. The gas mixture flow comprises oxygen gas and hydrogen gas from the electrolysis of water performed by the water electrolysis device.

The system may further comprise a gas filter. The gas filter is configured: receive the gas mixture flow from the gas outlet of the container; filter the gas mixture flow into a hydrogen gas flow; and present the hydrogen gas flow at a hydrogen outlet of the gas filter.

The system may further comprise a fuel cell. The fuel cell is configured to: receive the hydrogen gas flow from the hydrogen outlet of the gas filter; and react the received hydrogen gas flow with oxygen to generate an electrical current.

A further scope of applicability will become apparent from the detailed description given below. However, it should be understood that the detailed description and specific examples are given by way of illustration only.

It is to be understood that the terminology used herein is for purpose of describing particular embodiments only, and is not intended to be limiting. It must be noted that, as used in the specification and the appended claim, the articles "a," "an," "the," and "said" are intended to mean that there are one or more of the elements unless the context clearly dictates otherwise. Thus, for example, reference to "a unit" or "the unit" may include several devices, and the like. Furthermore, the words "comprising", "including", "containing" and similar wordings does not exclude other elements or steps.

Brief description of the drawings

The above and other aspects will now be described in more detail, with reference to appended figures. The figures should not be considered limiting; instead they are used for explaining and understanding.

As illustrated in the figures, the sizes of layers and regions may be exaggerated for illustrative purposes and, thus, are provided to illustrate the general structures. Like reference numerals refer to like elements throughout.

Fig. 1 illustrates a cross-sectional view of a water electrolysis device.
Fig. 2 illustrates an arrangement of the nanopillars of the water electrolysis device in Fig. 1, as seen from above.
Fig. 3 illustrates a system for water electrolysis comprising the water electrolysis device of Fig 1.
Fig. 4 illustrates an alternative system for water electrolysis.

Detailed description

The present invention will now be described more fully hereinafter with reference to the accompanying drawings, in which currently preferred embodiments of the invention are shown. This invention may, however, be embodied in many different forms.

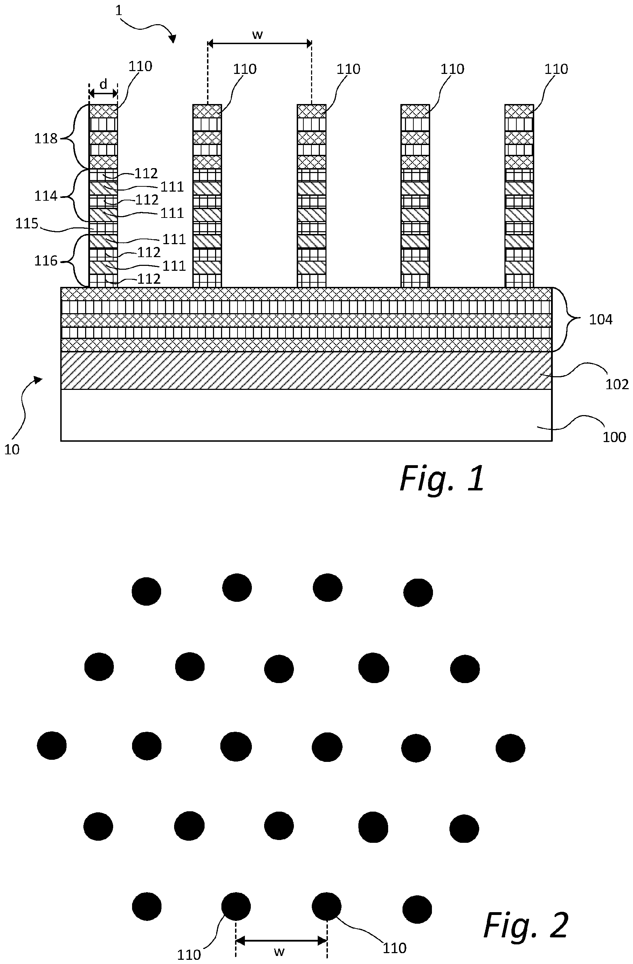

Fig. 1 illustrates a cross-sectional view of a water electrolysis device 1. The water electrolysis device 1 may be self-propelled. The water electrolysis device 1 may be in the form of a semiconductor chip. The water electrolysis device 1 comprises a semiconductor structure 10 comprising a plurality of semiconductor layers. One or more layers of the semiconductor structure 10 may comprise nitride semiconductor material, e.g. group III-Nitride material. Group III-Nitride material may herein refer to one or more alloys of material from group III in the periodic table and nitrogen, e.g. GaN, AlN, AlGaN, InGaN, or InGaNP. The semiconductor structure 10 is arranged on a substrate 100. The substrate 100 having a 2D plane of extension. The normal to the substrate 100 is a growth direction of the semiconductor structure 10, i.e. the direction in which the semiconductor structure 10 is grown, e.g. epitaxially grown. The substrate 100 is typically a Silicon substrate, e.g. in the form of a Silicon wafer.

A buffer layer 102 may be arranged on top of the substrate 100. The buffer layer 102 may be an AlN layer. The AlN layer may be a layer of AlN sputtered on the substrate 100. The buffer layer 102 may have a thickness of 1-2 μm.

On top of the buffer layer 102 a sequence of layers may follow. Such a sequence of layers may form a superlattice structure 104 comprising alternating AlN and $Al_zGa_{1-z}N$ layers, wherein $0.2 \leq z \leq 0.8$. The superlattice structure 104 may form a Bragg reflector. Arranging such a Bragg reflector may enhance the capturing of incoming light in the water electrolysis device 1. The superlattice structure 104 may comprise a periodic layer structure of alternating AlGaN and AlN layers. The superlattice 104 may have a thickness of 100 - 200 nm. The layers of the superlattice structure 104 may be abutting each other. The layers of the superlattice structure 104 may have a same thickness. The AlGaN layers of the superlattice structure 104 may have a same composition, i.e. a same Al/Ga content, e.g. 40% Al and 60% Ga. Alternatively, the layers of the superlattice structure 104 may differ in composition and/or thickness. For example, an aluminum content of the AlGaN layers may gradually change. As another example, or in combination, the thickness of the AlGaN layers and/or the AlN layers may gradually change. In addition to act as a Bragg reflector, the superlattice structure 104 may provide for improved strain layer management of GaN-on-Si. That is, improved strain layer management for arranging one of more GaN layers on the superlattice structure 104.

The buffer layer 102, possibly in combination with the superlattice structure 104, is enabling epitaxial growth of GaN layers with sufficiently low defect density. Further, the buffer layer 102, possibly in combination with the superlattice structure 104, is preventing wafer bow and/or warp.

The semiconductor structure 10 further comprises a plurality of nanopillars 110. Each nanopillar 110 has a vertical extension in relation to the plane of extension of the substrate 100. The nanopillars 110 may be formed by epitaxially growing a plurality of layers forming a layered structure and subsequently etching out the nanopillars 110 from the layered structure. Each nanopillar 110 may have a largest cross section, in a plane parallel to the plane of extension of the substrate 100, of less than or equal to 20 nm, preferably less than or equal to 10 nm. Each nanopillar 110 comprises a plurality of quantum dot segments 111 and a plurality of barrier segments 112. Each quantum dot segment 111 is interposed along the vertical extension between two barrier segments 112. Each quantum dot segment 111 has a thickness of less than or equal to 20 nm, preferably less than or equal to 10 nm, along the vertical extension of the nanopillar 110. The barrier segments 112 has a similar thickness as the quantum dot segments 111. The quantum dot segments 111 are made of an $In_xGa_{1-x}N$ alloy. An

Indium content, x, of a quantum dot segment 111 is $0.40 \leq x \leq 0.60$. The Indium content, x, may be similar in all the quantum dot segments 111. The barrier segments 112 are made from GaN.

Each nanopillar 110 comprises a p-side portion and an n-side portion. The p-side portions of the nanopillars 110 constitutes photoanodes 114 of the water electrolysis device 1. The n-side portions of the nanopillars 110 constitutes photocathodes 116 of the water electrolysis device 1. The p-side portion, i.e. the photoanode 114, and the n-side portion, i.e. the photocathode 116, of a nanopillar 110 are separated by a depletion portion 115. The depletion portion 115 comprising GaN. The depletion portion 115 may be intrinsically formed by at least one of the barrier segments 112. Additionally, or in combination, the depletion portion 115 may be substantially thin, such as 1 nm. The depletion portion 115 may comprise a first and a second heavily doped GaN segments, i.e. having a doping level of $10^{20}$ cm$^{-2}$, to form a tunnel junction of p- and n-doped segments of GaN. For avoidance of doubt, such tunnel junction may have doped segments in the reverse order of the neighboring GaN segments along the nanopillars such as p-GaN/ n++ GaN / p++ GaN / n-GaN.

The photoanode 114 of a respective nanopillar 110 comprises at least one quantum dot segment 111. The photocathode 116 of a respective nanopillar 110 comprises at least one quantum dot segment 111. As mentioned above, the photoanode 114 is p-doped and the photocathode 116 is n-doped. In the in Fig. 1 illustrated example, each photoanode 114 comprises two quantum dot segments 111 and each photocathode 116 comprises two quantum dot segments 111. It is however realized that the photoanodes 114 and/or the photocathodes 116 may comprise more than two quantum dot segments 111. In the in Fig. 1 illustrated example, the photoanode 114 and the photocathode 116 of a respective nanopillar 110 comprises a same amount of quantum dot segments 111. It is however realized that a photoanode 114 and a photocathode 116 of a respective nanopillar 110 may comprise different number of quantum dot segments 111.

As being illustrated in Fig. 1, each nanopillar 110 may further comprise a top portion 118 comprising a superlattice structure. The superlattice structure comprising alternating AlN and $Al_zGa_{1-z}N$ layers, wherein $0.2 \leq z \leq 0.8$. The superlattice structure 104 may form a Bragg reflector. Arranging such Bragg reflector may enhance the capturing of incoming light in the respective nanopillar 110.

The water electrolysis device 1 is configured to, when in operation, provide a path for electron transport from a photoanode 114 of a respective nanopillar 110, via the respective depletion portion 115 of the respective nanopillar 110, to the photocathode 116 of the respective nanopillar 110. Upon absorbing light, e.g. sunlight, at a respective photoanode 114 photoexcitation of electrons will occur. The photoexcited electrons may be electrons in a conduction band of the photoanode 114. The creation of the photoexcited electrons in the photoanode 114 may simultaneously create holes. The holes may be holes in the valence band of the photoanode 114. Holes in the valence band of the photoanode 114 may be transferred to the surface of the nanopillar and oxidize water in which the water electrolysis device 1 is immersed to create hydrogen ions. Preferably at pH=7 without addition of acids or base to the water. Thus, when the water electrolysis device 1 is in operation, oxygen gas and hydrogen ions may be formed at the photoanode 114 according to:

$$\text{(anode) } H_2O \rightarrow \frac{1}{2}O_2 + 2H^+ + 2e^-$$

The hydrogen ions may then travel through the water in which the water electrolysis device 1 is immersed to the respective photocathode 116 to pick up electrons and form hydrogen gas at the photocathode according to:

$$\text{(cathode) } 2H^+ + 2e^- \rightarrow H_2$$

Thus, the water electrolysis device 1 is configured to perform the electrolysis of water to produce: oxygen gas, at the photoanodes 114, and hydrogen gas, at the photocathodes 116. Since water may have a low electrical conductance, an electrolyte may advantageously be used for the full reaction $H_2O \rightarrow \frac{1}{2} O_2 + H_2$ take place. The hydrogen ions get transported by the electric field between the photoanodes 114 and the photocathodes 116 where the anode and cathode half-reactions take place.

It may be advantageous to perform the electrolysis of water on salt water, e.g. sea water, as salt water may comprise a high concentration of ions. Thus, the water electrolysis device 1 may be configured to be immersible in salt water upon operation of the same.

Quantum dots of $In_xGa_{1-x}N$ have the advantage that they provide an energy gap between electron and hole energy levels of 1.23 eV or more. The energy gap depends on both the bandgap of the $In_xGa_{1-x}N$ material and on quantum confinement. An energy gap of at least 1.23 eV is required for electrolysis of water. In many situations it may be advantageous with an energy gap larger than 1.23 eV. Further, $In_xGa_{1-x}N$ alloy material may be stable against photo-corrosion, such as the anti-corrosion of stainless steel i.e. an alloy of iron and chromium. Hence, the water electrolysis device 1 may be stable and not degrade with time. Such stable water electrolysis device 1 may be cost-efficient as it may not need to be replaced often.

The water electrolysis device 1 is configured such that when it is immersed in water, the quantum dot segments 111 of the photoanodes 114 are in contact with water. Thus, charges may be exchanged at the quantum dot segments 111 of the photoanodes 114 to water interface, as part of the electrolysis process. As mentioned above, the quantum dot segments 111 of $In_xGa_{1-x}N$ may

be configured to have an energy gap of at least 1.23 eV. The quantum dots segments of $In_xGa_{1-x}N$ may be configured to have an energy gap of at least 1.6 eV. The quantum dots of $In_xGa_{1-x}N$ may be configured to have an energy band gap in the range of 1.6 eV to 2.4 eV. This may provide efficient light absorption.

$In_xGa_{1-x}N$ alloys exhibit bandgaps of 1.76 eV at 300K at an Indium concentration of x=50%. Such bandgap straddles the oxidation potential of water. This is also the practical limit due to the immiscibility gap for InGaN alloys. The bandgap of $In_{0.5}Ga_{0.5}N$ can produce such photovoltage necessary at ~2.0 eV assuming detailed balance.

The optical absorption coefficient of InGaN is $10^5$ cm$^{-1}$ so light can readily be absorbed in thin layers of material less than 100 nm. The absorption coefficient of $In_xGa_{1-x}N$ can be fitted to:

$$\alpha(E) = \sqrt{a\left(E - E_g\right) + b\left(E - E_g\right)^2}.$$

For an Indium composition of 50%, the a and b coefficients are a=0.51167 and b=0.4683.

The inventor has further realized that $In_xGa_{1-x}N$ alloys may be arranged as a plurality of quantum dots in the axial direction of each nanopillar to provide strongly electron correlated quantum dots. The additional confinement energy of the electrons, in addition to the bandgap energy, is given by the Schrödinger equation as

$$E_n = \frac{\hbar^2 c^2 \pi^2}{2m_e c^2 L^2} n^2$$

. This provides about ~0.36 eV / $L^2$ of the ground state, where L has unit of nm. Hence, the larger this confinement energy the higher the effective bandgap energy causing a blue shift. These quantum dots become correlated by the definite potential energy barriers that confines electrons (and holes) and by the fact that the electrons can tunnel between the quantum dots. Then the energy threshold for the generation of multiple excitons is

$$h v_{th} = \left(2 + \frac{m_e}{m_h}\right) E_g$$

. Hence, multiple excitons can readily be generated at energies twice the bandgap energy $E_g$.

Fig. 2 depicts a hexagonal arrangement of the nanopillars 110, as seen from above. In the illustrated arrangement of the nanopillars 110 the plurality of nanopillars are arranged in a hexagonal cell pattern with an additional nanopillar 110 in a center of each hexagonal cell. A distance, w, between the nanopillars may be less than 100 nm. By such an arrangement the nanopillars 110 may be closely packed to provide electron tunneling between nanopillars 110, more specifically between $In_xGa_{1-x}N$ quantum dot segments 111 arranged in the respective nanopillars 110. This may improve multiple excitation generation of electron-hole pairs. By doing so, a single photon may generate more than 2 electron-hole pairs. A further advantage of such closely packed nanopillar structure is that a surface to volume ratio may be enhanced. The surface to volume ratio may be above 3 $m^2/g$ to facilitate a high active area for water electrolysis.

In order to further improve the efficiency limit of water electrolysis, the inventor has realized that very small quantities, approximately one microgram/cm$^2$, of rare earth ions $Er^{3+}$, $Pr^{3+}$, $Tm^{3+}$, $Tb^{3+}$ may be incorporated in the barrier segments of GaN as a ladder for excited electrons to utilize rare earth doped $In_xGa_{1-x}N$ and GaN as the two bandgaps for water electrolysis with higher efficiency. Hence, the limitation of the bandgap energy $E_g$, is overcome and intermediate band transitions is allowed by rare earth atoms. Eu:InGaN, Pr-InGaN, Tm:InGaN and Tb:InGaN may be distributed in sequence for exciting electrons at intermediate energy levels in the energy bandgap of $In_xGa_{1-x}N$ alloys. More specifically, such energy transitions with the aid of rare earth atoms may provide a means of overcoming the band gap limitation of doped $In_xGa_{1-x}N$ for more efficient water electrolysis.

Europium dopant atoms and/or Praseodymium dopant atoms may be used to excite electrons to energy states at red (625-740 nm) wavelengths. A quantum dot that incorporates three rare earth metals (Eu, Er, Tm):GaN may provide a means to excite electrons between inter band energy levels. Further, by introducing the rare earth atoms in consecutive barrier segments 112 of GaN, the electrons can be excited from Eu:GaN to Er:GaN, and to Tm:GaN to GaN VB edge or from Pr:GaN to Tb:GaN to Tm:GaN to GaN VB edge.

A photoelectrochemical efficiency of 40.0% is realizable using only two band gaps 1.40, 0.52 eV, "Efficiency limits for photoelectrochemical water-splitting, *Nature Communications, (2016),* 7.". However, according to the present invention instead of using these two band gaps, Eu:$In_{0.5}Ga_{0.5}N$ or Pr:$In_{0.5}Ga_{0.5}N$ may be used. Praseodymium, Pr, has energy transitions at 1303 nm, 1914 nm, 650 nm and 956 nm. Europium, Eu, has energy transitions at 545 nm, 600 nm, 621 nm, and 663 nm. Erbium, Er, has energy transitions at 537 nm, 558 nm, 1000 nm and 1540 nm, and Thulium, Tm, has energy transitions at 477 nm, 647 nm, and 801 nm. These energy transitions can be used to reach inter bandgap levels of $In_{0.5}Ga_{0.5}N$, and GaN. Eu:$In_{0.5}Ga_{0.5}N$. More specifically, the energy transitions at wavelengths higher than 700 nm in the infrared, can be used to excite electrons from the energy levels of 0.8 - 1.24 eV from the GaN valence band edge.

Further, the $In_xGa_{1-x}N$ quantum dot segments 111 may be doped by rare earth metals, e.g. Erbium. Hence, electron tunneling may also be provided between states in-between the valence band and the conduction band of $In_xGa_{1-x}N$ alloy quantum dot segments 111. As such, this may further increase the multiple exciton generation beyond 2 electrons per photon. For a single bandgap device that comprises $In_{0.5}Ga_{0.5}N$ quantum dot segments 111 with a band gap at 1.76 eV. By raising electrons to higher excited states in the bandgap energy region (in e.g. Erbium orbitals), more electrons may be excited to half the bandgap energy and hence also at $2E_g$. The strong Coulomb interaction between f-orbital electrons in Erbium may enhance the electron-electron repulsion and hence enhance the electron correlation.

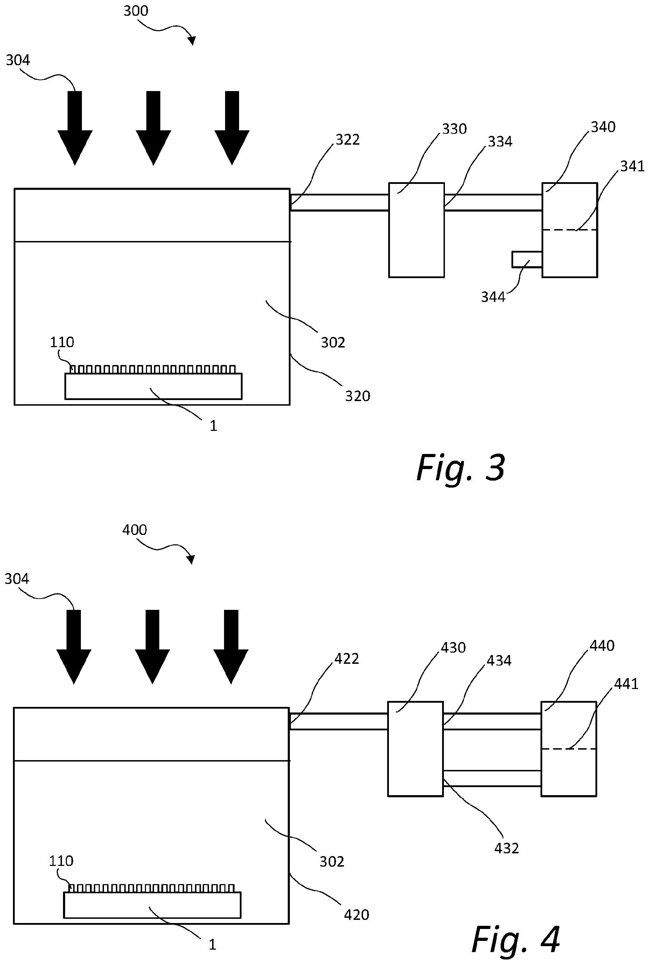

Fig. 3 illustrates a system 300 comprising a water electrolysis device 1 as previously described. The system 300 further comprises a container 320 configured to hold water 302, wherein the container 320 comprises a gas outlet 322. In Fig. 3 the container holds water 302. The water electrolysis device 1 and the container 320 are arranged such that when the container 320 holds the water 302 at least the nanopillars 110 of the water electrolysis device 1 is immersed in the water 302. In the in Fig. 3 illustrated example, the entire water electrolysis device 1 is immersed in the water 302. However, the water electrolysis device 1 may alternatively be arranged in other ways. For example, the substrate 100 of the water electrolysis device 1 may form part of a wall of the container 320, e.g. part of the bottom of the container 320. The illustrated system 300 is illuminated by light 304, e.g. sunlight.

The system 300 is configured such that when the water electrolysis device 1 is in operation, i.e. the water electrolysis device 1 is immersed in the water 302 and illuminated by light 304, a gas mixture flow is presented at the gas outlet 322 of the container 320. Oxygen gas will be formed at the photoanodes 114, and hydrogen gas will be formed at the photoanodes 116. The gases may mix and be collected in the container 320, e.g. by the container 320 being closed at the top to prevent the gases from escaping upwards. The gas outlet 322 of the container 320 may be arranged above a water level such that the collected gases flows out of the gas outlet 322 as a gas mixture flow.

The illustrated system 300 further comprises a gas filter 330 configured to receive the gas mixture flow from the gas outlet 322 of the container 320. The gas filter 330 is further configured to filter the gas mixture flow into a hydrogen gas flow. The gas filter 330 is further configured to present the hydrogen gas flow at a hydrogen outlet 334 of the gas filter 330. The gas filter 330 may receive the gas mixture flow from the gas outlet 322 of the container 320 via a gas pipe connecting the gas outlet 322 of the container 320 with the gas filter 330.

The system 300 further comprises a fuel cell 340 configured to receive the hydrogen gas flow from the hydrogen outlet 334 of the gas filter 330. The fuel cell 340 is further configured to react the received hydrogen gas flow with oxygen to generate an electrical current. The fuel cell 340 may receive the hydrogen gas flow from the hydrogen outlet 334 of the gas filter 330 via a gas pipe connecting the hydrogen outlet 334 of the gas filter 330 with the fuel cell 340. The oxygen used in the reaction in the fuel cell 340 may be taken from air, e.g. air from an air inlet 344.

Fig. 4 illustrates an alternative system 400. The system 400 is configured to filter out both oxygen and hydrogen from the gas mixture flow and react the filtered-out hydrogen with the filtered-out oxygen in the fuel cell 440. Such a system 400 may be used as an alternative to the system 300 in Fig. 3. The gas filter 430 of the system 400 is configured to receive the gas mixture flow from a gas outlet 422 of the container 420. The gas filter 430 is further configured to filter the gas mixture flow into an oxygen gas flow and a hydrogen gas flow. The gas filter 430 is further configured to present the oxygen gas flow at an oxygen outlet 432 of the gas filter 430 and present the hydrogen gas flow at a hydrogen outlet 434 of the gas filter 430.

The system 400 further comprises a fuel cell 440 configured to receive the oxygen gas flow from the oxygen outlet 432 of the gas filter 430, receive the hydrogen gas flow from the hydrogen outlet 434 of the gas filter 430, and react the received hydrogen gas flow with oxygen from the received oxygen gas flow to generate the electrical current.

For either system 300, 440, the gas filter 330, 430 may be a pressure swing adsorption filter. The pressure swing adsorption filter may comprise an adsorbent material, e.g. zeolites or molecular sieves. The pressure swing adsorption filter may alternate between a high- and a low-pressure phase. The received gas mixture flow may enter the pressure swing adsorption filter at high pressure in the high-pressure phase. The adsorbent material may then adsorb one gas component of the gas mixture flow, e.g. adsorb oxygen. The other gas component of the gas mixture flow, e.g. hydrogen, may pass through the filter to the corresponding outlet, in this example to the hydrogen outlet 334, 434. Thus, the hydrogen may be presented as the hydrogen gas flow at the hydrogen outlet 334, 434 of the gas filter 330, 430.

The pressure swing adsorption filter may be configured to change the pressure in the gas filter 330, 430 to a low pressure in a low-pressure phase to release the adsorbed gas. In the system 400 illustrated in Fig. 4 both the gas from the high-pressure phase and the low-pressure phase of the pressure swing adsorption filter may be directed to the fuel cell 440. Continuing on the previous example with oxygen being adsorbed, the hydrogen outlet 334, 434 and the inlet for the gas mixture flow may be closed during the low-pressure phase such that the released oxygen is presented as the oxygen gas flow at the oxygen outlet 432 of the gas filter 430 in Fig. 4. If the fuel cell 340 does not use oxygen from the gas filter 330, such as in the system 300 illustrated in Fig. 3, the pressure swing adsorption filter may release the oxygen in the low-pressure phase to an exhaust.

For either system 300, 440, the fuel cell 340, 440 may be a proton-exchange membrane fuel cell comprising a proton-exchange membrane 341, 441. As illustrated in Figs. 3 and 4, hydrogen gas flow from the hydrogen outlet 334, 434 of the gas filter 330, 430 may enter the fuel cell 340, 440 on one side of the proton-exchange membrane 341, 441. Oxygen, e.g. from an air inlet 344 (as illustrated in Fig. 3) or received as an oxygen gas flow from the oxygen outlet 432 of the gas filter 430 (as illustrated in Fig. 4) may enter the fuel cell 340, 440 on the other side of the proton-exchange membrane 341, 441.

At the hydrogen side of the proton-exchange membrane 341, 441 H+ ions (protons) and electrons may be formed. The protons may pass through the proton-exchange membrane 341, 441 while the electrons may travel through an external load circuit. At the oxygen side of the proton-exchange membrane 341, 441, oxygen and protons that has passed through the proton-exchange membrane 341, 441 and electrons that have travelled through the external load circuit may react to form water. Thus, the received hydrogen gas flow may react with oxygen to generate the electrical current in the external load circuit.

The person skilled in the art realizes that the present invention by no means is limited to what is explicitly described above. On the contrary, many modifications and variations are possible within the scope of the appended claims.

Additionally, variations can be understood and effected by the skilled person in practicing the claimed invention, from a study of the drawings, the disclosure, and the appended claims.

**Claims**

1. A water electrolysis device (1) comprising a plurality of nanopillars (110), wherein each nanopillar (110):

   has a vertical extension in relation to a plane of extension of a substrate (100) supporting the nanopillars (110);
   comprises a plurality of quantum dot segments (111) of $In_xGa_{1-x}N$ alloy, wherein each quantum dot segment (111) is interposed along the vertical extension between barrier segments (112) of GaN, wherein each quantum dot segment (111) has a thickness of less than or equal to 20 nm along the vertical extension; and
   comprises a p-side portion constituting a photoanode (114) and an n-side portion constituting a photocathode (116), wherein the photoanode (114) comprises at least one quantum dot segment (111) and the photocathode (116) comprises at least one quantum dot segment (111), wherein the photoanode (114) and the photocathode (116) are separated by a depletion portion (115) comprising GaN.

2. The water electrolysis device according to claim 1, wherein each nanopillar (110) has a largest cross section, in a plane parallel to the plane of extension of the substrate (100), of less than or equal to 20 nm.

3. The water electrolysis device according to claim 1 or 2, wherein for each nanopillar (110), a distance to each neighboring nanopillar (110) in the plane of extension of the substrate (100) is less than 100 nm.

4. The water electrolysis device according to claim 3, wherein the plurality of nanopillars (110) are arranged in a hexagonal cell pattern with an additional nanopillar in a center of each hexagonal cell.

5. The water electrolysis device according to any one of claims 1-4, wherein an Indium content, x, of the one or more quantum dot segments is $0.40 \leq x \leq 0.60$.

6. The water electrolysis according to any one of claims 1-5, wherein one or more of the barrier segments (112) comprises a dopant selected from a group of rare earth dopants comprising Erbium, Praseodymium, Thulium and Terbium.

7. The water electrolysis device according to any one claims 1-6, wherein one or more of the quantum dot segments (111) comprises a dopant selected from a group of rare earth dopants comprising Erbium, Praseodymium, Thulium and Terbium.

8. The water electrolysis device according to any one claims 1-7, wherein the plurality of nanopillars (110) further comprises a top portion (118), wherein the top portion (118) comprises a superlattice structure of AlN and AlGaN segments.

9. The water electrolysis device according to any one claims 1-8, wherein a superlattice structure (104) of AlN and AlGaN layers are arranged in-between the substrate (100) and the plurality of nanopillars (110).

10. A system (300, 400) for water electrolysis, the system comprising:

a water electrolysis device (1) according to any one of claims 1-9; and
a container (320, 420) configured to hold water (302), the container (320, 420) comprising a gas outlet (322, 422),
wherein the water electrolysis device (1) and the container (320, 420) are arranged such that when the container holds water (302), the plurality of nanopillars (110) of the water electrolysis device (1) are immersed in the water (302),
wherein the system (300, 400) is configured such that when the water electrolysis device (1) is in operation, and the plurality of nanopillars (110) of the water electrolysis device (1) are immersed in the water (302) and illuminated by light (402), a gas mixture flow is presented at the gas outlet (322, 422) of the container (320, 420), wherein the gas mixture flow comprises oxygen gas and hydrogen gas from the electrolysis of water performed by the water electrolysis device (1).

11. The system according to claim 10, further comprising a gas filter (330, 430) configured to:

receive the gas mixture flow from the gas outlet (322, 422) of the container (320, 420);
filter the gas mixture flow into a hydrogen gas flow; and
present the hydrogen gas flow at a hydrogen outlet (334, 434) of the gas filter (330, 430).

12. The system according to claim 11, further comprising a fuel cell (340, 440) configured to:

receive the hydrogen gas flow from the hydrogen outlet (334, 434) of the gas filter (330, 430); and
react the received hydrogen gas flow with oxygen to generate an electrical current.

*Fig. 1*

*Fig. 2*

Fig. 3

Fig. 4

Europäisches
Patentamt

European
Patent Office

Office européen
des brevets

# EUROPEAN SEARCH REPORT

**Application Number**

EP 24 19 0042

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/325743 A1 (MI ZETIAN [CA] ET AL) 12 November 2015 (2015-11-12) * paragraphs [0194], [0239]; figure 31 * ----- | 1-12 | INV. H01M8/0656 B01D53/22 B01J19/12 C01B3/04 C25B1/04 C25B9/17 C25B9/50 |
| | | | **TECHNICAL FIELDS SEARCHED (IPC)** |
| | | | H01M C25B C01C B01J B01D C01B |

The present search report has been drawn up for all claims

| Place of search | Date of completion of the search | Examiner |
|---|---|---|
| Munich | 19 December 2024 | Dunn, Halina |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

    ..............................................................................................

& : member of the same patent family, corresponding
    document

## ANNEX TO THE EUROPEAN SEARCH REPORT
## ON EUROPEAN PATENT APPLICATION NO.

EP 24 19 0042

This annex lists the patent family members relating to the patent documents cited in the above-mentioned European search report.
The members are as contained in the European Patent Office EDP file on
The European Patent Office is in no way liable for these particulars which are merely given for the purpose of information.

19-12-2024

| Patent document cited in search report | Publication date | Patent family member(s) | Publication date |
|---|---|---|---|
| US 2015325743 A1 | 12-11-2015 | US 2013240348 A1<br>US 2015325743 A1 | 19-09-2013<br>12-11-2015 |

EPO FORM P0459

For more details about this annex : see Official Journal of the European Patent Office, No. 12/82